Europäisches Patentamt

European Patent Office

Office européen des brevets

(19)

(11) Veröffentlichungsnummer: **0 074 456**

**A1**

(12) ## EUROPÄISCHE PATENTANMELDUNG

(21) Anmeldenummer: **81890157.1**

(22) Anmeldetag: **30.09.81**

(51) Int. Cl.³: **B 29 C 17/02**

(30) Priorität: **14.09.81 AT 3950/81**

(43) Veröffentlichungstag der Anmeldung:
**23.03.83 Patentblatt 83/12**

(84) Benannte Vertragsstaaten:
**BE CH DE FR GB IT LI LU NL SE**

(71) Anmelder: **Schnallinger, Helfried**
**Poststrasse 2**
**A-4061 Pasching(AT)**

(72) Erfinder: **Schnallinger, Helfried**
**Poststrasse 2**
**A-4061 Pasching(AT)**

(74) Vertreter: **Hübscher, Gerhard, Dipl.-Ing. et al,**
**Patentanwälte Dipl.-Ing. Gerhard Hübscher Dipl.-Ing.**
**Helmut Hübscher Dipl.-Ing. Heiner Hübscher**
**Spittelwiese 7**
**A-4020 Linz(AT)**

(54) **Verfahren zum Herstellen von Muffen od. dgl. an rohrförmigen Werkstücken aus Thermoplasten und Vorrichtung zur Durchführung des Verfahrens.**

(57) Bei dem Verfahren, bei dem das erwärmte Werkstück zur Muffe (6) und ein Endbereich dieser Muffe zu einer der Aufnahme einer Ringdichtung (18) dienenden Ringrille (21) aufgeweitet wird, wird die Ringrille (21) zunächst nur vorgeformt, dann in sie von innen her eine Ringdichtung (18) eingelegt und anschließend die Ringrille (21) unter Anpassung an diese Ringdichtung (18) in die Endform gebracht. Eine zur Durchführung des Verfahrens dienende Vorrichtung mit Außenform (1) und Aufmuffdorn (7) besitzt im Dorn ein Aufnahmemagazin (17) für eine Ringdichtung (18), die über einen Auswerfer (12) in die unter Mitwirkung eines einen Axialschub auf das Muffenende erzeugenden Schiebers (15) in eine Ringkammer (14, 16, 20) der Form vorgeformte Ringrille (21) eingelegt wird, wonach die Ringrille (21) unter Mitwirkung des Schiebers (15) fertig geformt wird.

FIG.4

"Verfahren zum Herstellen von Muffen od.dgl. an
rohrförmigen Werkstücken aus Thermoplasten und
Vorrichtung zur Durchführung des Verfahrens"

Die Erfindung betrifft ein Verfahren zum Herstellen von Muffen od.dgl. an rohrförmigen Werkstücken aus Thermoplasten, bei dem das auf Verformungstemperatur erwärmte Werkstück innerhalb einer Außenform mittels eines eingeführten Aufmuffdornes aufgeweitet und ein Muffenabschnitt durch weiteres Aufweiten in eine Ringnut od.dgl. der Außenform hinein zu einer eine Ringdichtung aufnehmenden Ringrille (Sicke) geformt wird.

Ferner betrifft die Erfindung eine Vorrichtung zur Durchführung dieses Verfahrens, mit einer Außenform und einem in eine Öffnung der Außenform hinein verstellbaren Aufmuffdorn, wobei ein Spalt zwischen Außenform und Dorn der zu erzeugenden Muffenform entspricht und zur Bildung der Ringrille an der Werkstückaußenseite eine Kammer vorgesehen ist.

Es ist bekannt, vorgewärmte, also auf Verformungstemperatur gebrachte rohrförmige Werkstücke aus Thermoplasten in einer Außenform durch Einführen eines Aufmuffdornes aufzuweiten und nach diesem ersten Verfahrensschritt einen Muffenabschnitt in eine Ringkammer, die meist in einem wenigstens zweiteiligen Bereich der Außenform vorgesehen ist, durch Druckluftzufuhr zur Ringrille aufzuweiten. Diese Vorgangsweise hat den Vorteil, daß eine verhältnismäßig tiefe Ringrille mit steilen Flanken erzeugt werden kann, wogegen bei anderen bekannten Verfahren, bei denen am Dorn von Haus aus ein die Ringrille bestimmender Kernteil, meist aus zusammendrückbarem Werkstoff, beispielsweise Gummi, vorgesehen wird, nur eine flache Ringrille mit zur Öffnung divergierenden Flanken erzeugt werden kann, wobei sich Schwierigkeiten beim Überschieben des heißen Werkstückendes über den Ringbereich ergeben.

Es sind auch Dorne bekannt, bei denen ein entsprechender Ring auf einer Keilfläche des Dornes abgestützt und mittels eines Endbundes über diese Keilfläche verstellbar ist, so daß der Ring erst nach dem Einführen des Aufmuffdornes in das Werkstück nach außen gedrückt werden kann. Die letztgenannte Konstruktion setzt eine komplizierte Dornkonstruktion und die Verwendung gummielastischer Ringe voraus, die einem hohen Verschleiß unterliegen.

Gleichgültig, wie nach den bekannten Verfahren die Ringrille hergestellt wird, ist es immer notwendig, die Dichtung in einem gesonderten Arbeitsgang einzulegen, was sorgfältig geschehen muß, um ein Herausrutschen der Dichtung beim Einführen eines Anschlußrohres in die Muffe zu vermeiden bzw. um zu gewährleisten, daß die Dichtung sich beim Einführen des Anschlußrohres in die Muffe nicht verkantet. Ungenügend steile Nutflanken begünstigen dieses Herausrutschen.

Aufgabe der Erfindung ist es, ein Verfahren und eine zu seiner Durchführung geeignete Vorrichtung zu finden, mit dessen bzw. deren Hilfe die Ringrillen der Muffen genau passend zur verwendeten Dichtung hergestellt werden können, die Anbringung der Dichtung an einer genau vorbestimmten Lage gewährleistet ist und wobei sogar im Bedarfsfall eine Klemmbefestigung der Dichtung in der Ringrille ermöglicht wird.

Der wesentliche Schritt des erfindungsgemäßen Verfahrens besteht darin, daß die Ringrille nur vorgeformt, dann in sie von innen her die Ringdichtung eingelegt und schließlich die Ringrille bei eingelegter Dichtung in die Endform gebracht wird.

Beim erfindungsgemäßen Verfahren kann die Dichtung als formender Bestandteil auf das Material im Ringrillenbereich einwirken, so daß eine gute Anpassung erzielt wird. Es ist sogar möglich, die Dichtung vorzuspannen, also festzuklemmen.

Nach einer Weiterbildung des Verfahrens wird nach dem Einlegen der Ringdichtung auf das Muffenende im Sinne einer Verringerung des Abstandes der Ringrillenränder und der Erzeugung eines hinterschnittenen Ringrillenquerschnittes ein Axialschub ausgeübt. Durch eine hinterschnittene Querschnittsform der Ringrille wird eine besonders gute Halterung der Dichtung erzielt, die noch dadurch verbessert werden kann, daß man Ringdichtungen mit an die erzeugbaren Hinterschneidungen der Ringrillenseitenflanken angepaßten, konkaven Seitenflanken bzw. gerillten Seitenflanken verwendet. Auch bereits während der Vorformung der Ringrille, die mit einer Drucklufteinwirkung erfolgt, kann man auf das Muffen- bzw. Werkstückende einen Axialschub ausüben, dieses Muffenende also stauchen, wodurch das Einfließen des Materials in die Ringnut der Außenform und damit die Bildung der Ringnut erleichtert wird und vor allem in diesem Bereich bei Verwendung von Rohren mit konstanter Wandstärke keine zu starke Materialschwächung stattfindet.

Die Dichtungen werden vor dem Einlegen in die Ringrille vorzugsweise zusammengedrückt, also elastisch radial gestaucht, um ihre Einführung von innen her zu ermöglichen. Es wäre auch möglich, die Dichtungsringe in eine von der Ringform abweichende, z.B. teilweise eingefaltete Form zu bringen und beim Einlegen in die Rin_grille wieder aufzuweiten.

Zur Durchführung des erfindungsgemäßen Verfahrens kann eine Vorrichtung der eingangs genannten Art so ausgebildet werden, daß eine axial gegenüber dem Dorn auf das freie Rohrende zu und mit diesem in die Außenform hinein verstellbarer Ringschieber od.dgl.

zur Erzeugung eines Axialschubes auf das auf den Dorn aufgemuffte Rohrende vorgesehen ist und daß der Dorn in seinem mit der Kammer fluchtenden Bereich ein Aufnahmemagazin für wenigstens einen Dichtungsring enthält, das durch eine Dornhülse verschließbar ist und für das ein Auswerfer vorgesehen ist.

Bei der Vorrichtung wird eine Folgesteuerung vorgesehen, die die einzelnen beweglichen Teile nacheinander im Sinne des gewünschten Funktionsablaufes betätigt.

Das Magazin kann die Form einer außen durch die Dornhülse verschließbaren Ringkammer aufweisen, in die axial, also von der einen Seite her, eine Auswurfhülse mit konischer Endfläche einschiebbar ist. Diese Auswurfhülse bildet dann den Auswerfer und drückt mit ihrem dicken Bereich die ausgestoßene Dichtung in die Ringrille.

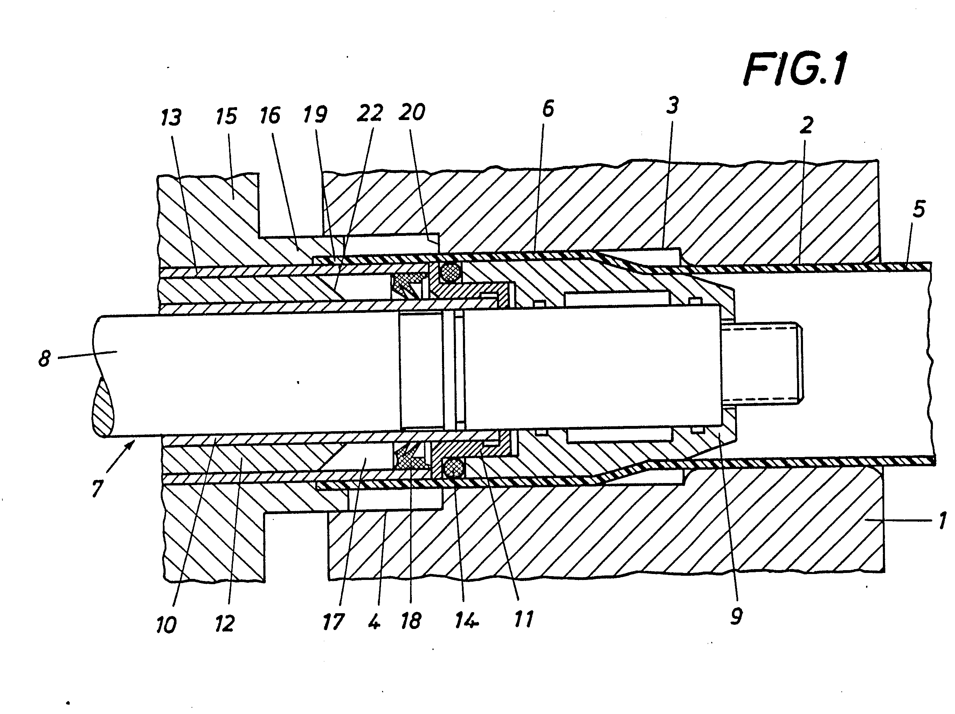

In der Zeichnung sind in den Fig. 1 - 4 jeweils untereinander gleiche Teilschnitte einer erfindungsgemäßen Vorrichtung zur Durchführung des erfindungsgemäßen Verfahrens in verschiedenen Arbeitsstufen dargestellt.

Eine gegebenenfalls nach einer Axialebene geteilte Außenform 1 besitzt eine Bohrung mit drei Abschnitten 2, 3, 4 verschiedenen Durchmessers. Dabei ist der Bohrungsabschnitt 2 entsprechend dem Außendurchmesser eines zu bearbeitenden rohrförmigen Werkstückes 5, der Durchmesser des Bohrungsabschnittes 3 entsprechend dem gewünschten Durchmesser einer am Rohrende herzustellenden Muffe 6 und der Durchmesser des Bohrungsabschnittes 4 entsprechend dem Außendurchmesser einer im Endbereich der Muffe 6 herzustellenden Ringrille (Sicke) gewählt.

Vom Ende 4 her kann in die Bohrung 2, 3, 4 ein Aufmuffdorn 7 eingesteckt werden, der einen auf einer Stange 8 befestigten, der gewünschten Muffeninnenform entsprechenden Kopf 9 aufweist, von einer Hülse 10 umgeben ist, die einen elastisch verformbaren Einsatz 11 festhält und auf dem eine Keilhülse 12 und eine weitere Dornhülse 13 axial verstellbar sind. Durch Betätigen der Hülse 10 kann bei der noch zu beschreibenden Ausformung der Ringrille die Druckluftzufuhr zur Innenseite des entsprechenden Muffenbereiches geregelt werden. Einrichtungen zur Druckluftzufuhr sind an und für sich bekannt und werden daher nicht näher erläutert. Der Teil 11 hat, gegebenenfalls gemeinsam mit einem O-Ring 14 die Aufgabe, bei der Druckluftzufuhr die Rohröffnung nach der einen Seite abzudichten.

Außen auf der Dornhülse 13 ist ein Ringschieber 15 geführt, der mit einem abgesetzten Ansatz 16 in den Bohrungsabschnitt 4 hinein verstellbar ist und dessen Bohrung im Endbereich auf den Rohraußendurchmesser erweitert ist.

Zwischen den Hülsen 10, 12, 13 ist ein Aufnahmeraum 17 für wenigstens eine Ringdichtung 18, deren Flanken konkav gewölbt sind, vorgesehen. Eine entsprechende Dichtung 18 kann nach Ausfahren der Hülse 12 über eine geeignete Zubringervorrichtung in den genannten Raum 17 eingebracht werden.

Bei der Herstellung der Muffe wird zunächst das vorgewärmte Rohr 5 in die Form 1 eingebracht und dann das Rohrende durch Einschieben des Aufmuffdornes 7, 9 zur Muffe 6 aufgeweitet. Diese Arbeitsweise ist an und für sich bekannt und wird daher nicht näher erläutert. Am Ende des ersten Aufmuffvorganges befinden sich die Muffen- und Vorrichtungsteile in der in Fig. 1 dargestellen Lage. Ein später das Muffenende bildendes Rohrstück 19 liegt im erweiterten Bohrungsbereich des Ansatzes 16. Die Kernhülse 13 hält die Dichtung 18 in ihrer zusammengedrückten Lage in der Kammer 17 fest.

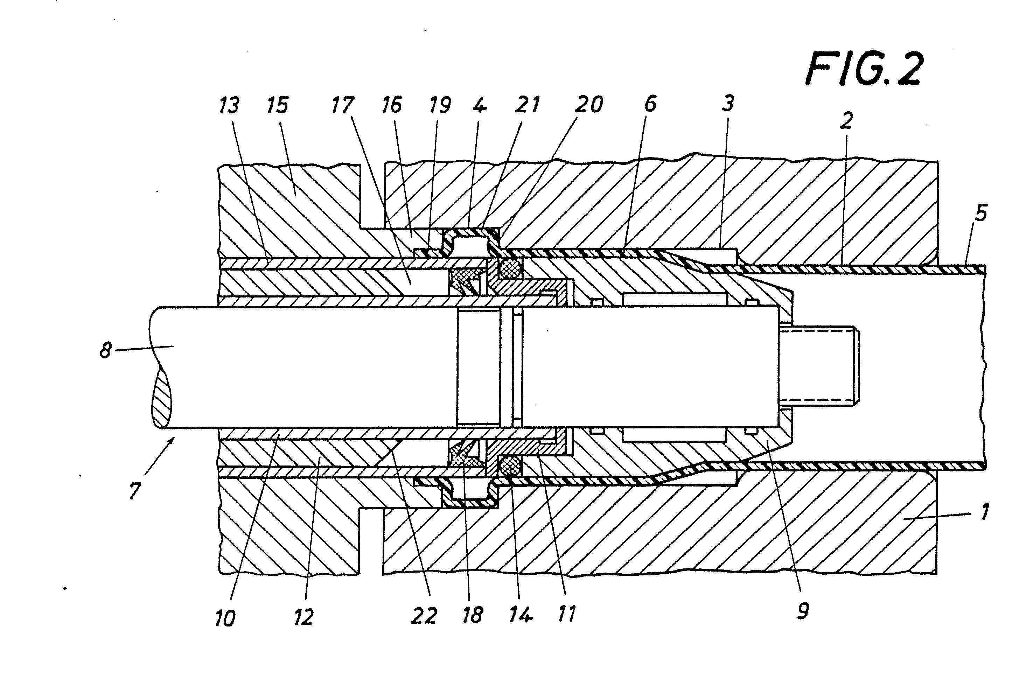

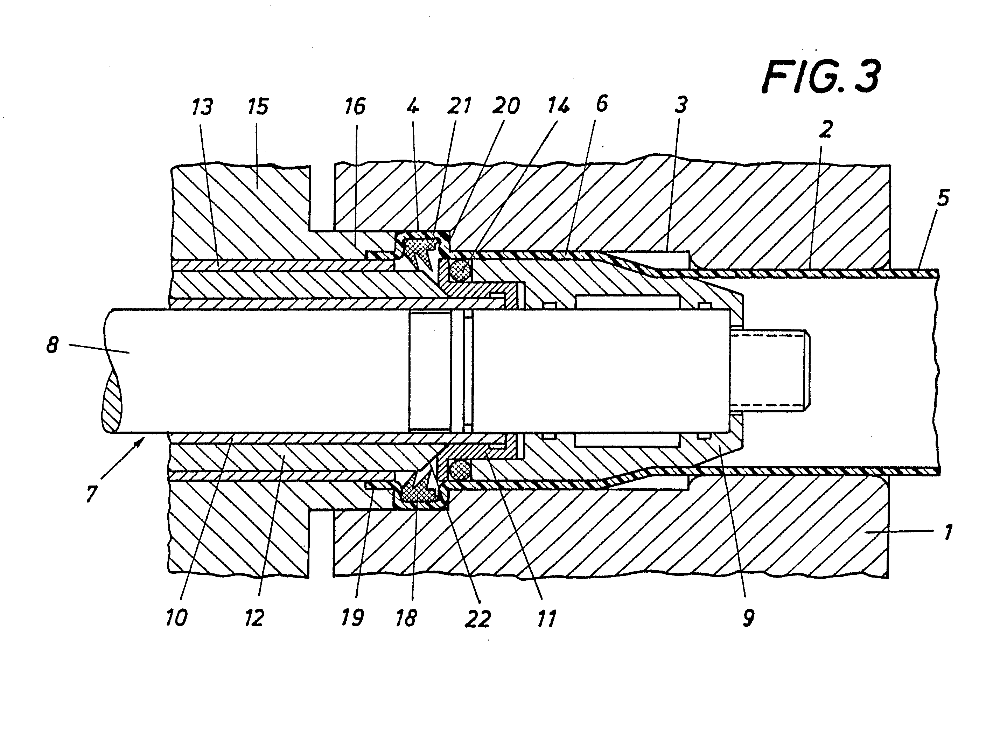

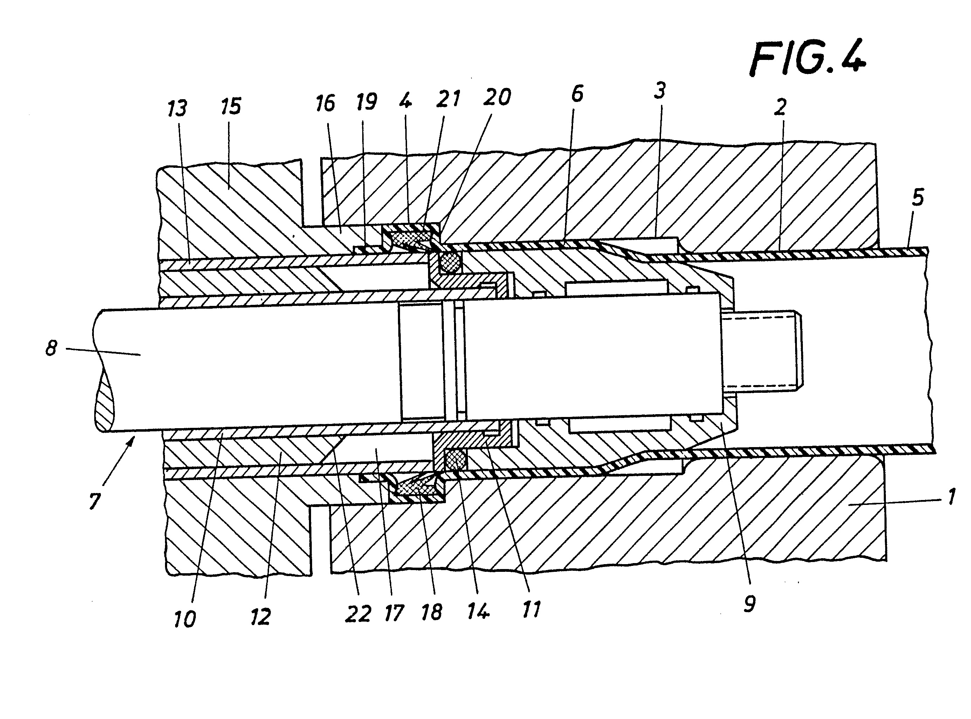

Der nächste Verfahrensschritt ist aus Fig. 2 ersichtlich. Es wird die Druckluftzufuhr ins Innere des Rohrendbereiches freigegeben und gleichzeitig wird der Ringschieber 15 nach rechts verstellt, so daß, wie dargestellt, in der aus der Bohrung 4, dem Absatz 20 und dem Ende des Ansatzes 16 gebildeten Ringkammer aus dem Muffenmaterial eine Ringrille 21 vorgeformt wird. Anschließend wird die Dornhülse 13, wie in Fig. 3 dargestellt, zurückgezogen, so daß sie die Kammer 17 gegen die Ringrille 21 zu freigibt und die mit einem konisch abgeschrägten Ende 22 einen Auswerfer bildende Hülse 12 wird vorgefahren, so daß sie die Dichtung 18 in die Ringrille 21 hineinschiebt. In Fig. 4 wurde gezeigt, daß anschließend die Dornhülse 13 wieder unter Abschluß der Kammer 17 vorgeschoben und mit Hilfe des Ringschiebers 15 ein weiterer Schub auf das Muffenende 19 ausgeübt wird, wodurch die freien Ränder der Ringrille 21 unter Bildung eines hinterschnittenen Profiles der Ringrille einander nähergebracht und die Dichtung 18 in ihrer Endlage fixiert wird.

Nach Abkühlung wird der Aufmuffdorn 7 herausgezogen, die Form 1 geöffnet und das nun fertiggestellte Werkstück 5 entnommen.

Mit der Vorrichtung nach den Fig. 1 - 4 ist es auch möglich, gleich geformte Muffen ohne Einlegen einer Dichtung herzustellen. Dabei verbleibt die Dornhülse 13 immer in ihrer Schließstellung , d.h. der Arbeitsschritt nach Fig. 3 "Auswerfen und Einlegen der Dichtung 18" entfällt.

Patentansprüche:

1. Verfahren zum Herstellen von Muffen od.dgl. an rohrförmigen Werkstücken aus Thermoplasten, bei dem das auf Verformungstemperatur erwärmte Werkstück innerhalb einer Außenform mittels eines eingeführten Aufmuffdornes aufgeweitet und ein Muffenabschnitt durch Aufweiten in eine Ringnut od.dgl. der Außenform hinein zu einer eine Ringdichtung aufnehmenden Ringrille (Sicke) geformt wird, dadurch gekennzeichnet, daß die Ringrille vorgeformt, dann in sie von innen her die Ringdichtung eingelegt und anschließend die Ringrille in die Endform gebracht wird.

2. Verfahren nach Anspruch 1, dadurch gekennzeichnet, daß nach dem Einlegen der Ringdichtung in die Ringrille auf das Muffenende im Sinne einer Verringerung des Abstandes der Ringrillenränder und der Erzeugung eines hinterschnittenen Ringrillenquerschnittes ein Axialschub ausgeübt wird.

3. Verfahren nach den Ansprüchen 1 und 2, dadurch gekennzeichnet, daß Ringdichtungen mit an die erzeug- baren Hinterschneidungen der Ringrillenflanken ange- paßten, konkaven Seitenflanken verwendet werden.

4. Vorrichtung zur Durchführung des Verfahrens nach einem der Ansprüche 1 - 3, mit einem in eine Öffnung einer Außenform hinein verstellbaren Aufmuffdorn, wobei ein Spalt zwischen Außenform und Dorn der zu erzeugenden Muffenform entspricht und zur Bildung einer Ringrille an der Werkstückaußenseite eine Kammer vorgesehen ist, dadurch gekennzeichnet, daß ein axial gegenüber dem Dorn auf das freie Rohrende zu und mit diesem in die Außenform hinein verstellbarer Schieber zur Erzeugung eines Axialschubes auf das auf den Dorn aufgemuffte Rohrende (19) vorgesehen ist und daß der Dorn (7) in seinem mit der Kammer (4, 16, 20) fluchtenden Bereich ein Aufnahmemagazin (17) für wenigstens einen Dichtungsring (18) enthält, das durch eine Dornhülse (13) verschließbar ist und für das ein Auswerfer (12) vorgesehen ist.

5. Vorrichtung nach Anspruch 4, dadurch gekennzeichnet, daß das Magazin (17) die Form einer außen durch die Dornhülse (13) abschließbaren Ringkammer aufweist, in die axial eine Auswerferhülse (12) mit keilförmiger Endfläche (22) einschiebbar ist.

**FIG.1**

0074456

*FIG.2*

13   15   17   16   19   4   21   20   6   3   2   5

8

7

10   12   22   18   14   11   9

1

FIG. 3

3/4

0074456

FIG.4

0074456

Europäisches
Patentamt

EUROPÄISCHER RECHERCHENBERICHT

Nummer der Anmeldung

0074456

EP 81 89 0157.1

| EINSCHLÄGIGE DOKUMENTE | | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | DE – A1 – 2 462 186 (JOHNS–MANVILLE CORP.) | | B 29 C 17/02 |
| X | * Anspruch 1; Fig. 1 * | 1-3 | |
| Y | * Fig. 5 * | 4 | |
| | –– | | |
| | EP – A1 – 0 013 040 (POLVA–NEDERLAND B.V.) | | |
| X | * Ansprüche 1, 2 * | 1,2 | |
| Y | * Fig. 1 bis 11 * | 4 | |
| | –– | | |
| | US – A – 4 231 983 (D.W. FRENCH) | | RECHERCHIERTE SACHGEBIETE (Int. Cl.³) |
| X | * Anspruch 1 * | 1 | |
| Y | * Fig. 1 bis 6 * | 4 | |
| | –– | | |
| Y | US – A – 4 234 301 (F.A. HAYES et al.) | 4 | B 29 C 17/00 |
| | * Anspruch 1; Fig. 13 * | | F 16 L 47/00 |
| | –– | | |
| A | DE – A1 – 3 000 547 (REHAU PLASTIKS AG & CO.) | 1-4 | |
| | * Ansprüche 1, 2; Fig. * | | |
| | –– | | |
| A | DE – A1 – 2 717 487 (WAVIN B.V.) | 1,2,4 | |
| | * Ansprüche 5 bis 8; Fig. 1 bis 3 * | | |
| | & GB – A – 1 587 018 | | |
| | –– | | |
| A | DE – A – 2 232 479 (FORSHEDA, IDEUTVECK-LING AB) | 1,3,4 | |
| | * Ansprüche 1 bis 4; Fig. 1a bis 1c * | | |
| | –– | | |
| | ./.. | | |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 29-11-1982 | FINDELI |

EPA form 1503.1 06.78

**Europäisches Patentamt**

**EUROPÄISCHER RECHERCHENBERICHT**

| | EINSCHLÄGIGE DOKUMENTE | | KLASSIFIKATION DER ANMELDUNG (Int. Cl.³) · |
|---|---|---|---|
| Kategorie | Kennzeichnung des Dokuments mit Angabe, soweit erforderlich, der maßgeblichen Teile | betrifft Anspruch | |
| A | <u>DE - A1 - 2 836 035</u> (JOHNS-MANVILLE CORP.) <br><br> * Ansprüche 9 bis 11; Fig. 1 bis 6 * <br><br> -- | 1,4 | |
| A | <u>DE - A1 - 2 538 278</u> (RIEBER & SOEN A/S) <br><br> ---- | | |
| | | | **RECHERCHIERTE SACHGEBIETE (Int. Cl.³)** |